# EUROPÄISCHE PATENTSCHRIFT

(11) **EP 2 574 226 B1**
(45) Veröffentlichungstag und Bekanntmachung des Hinweises auf die Patenterteilung: **12.11.2014**
(21) Anmeldenummer: 11183552.6
(22) Anmeldetag: 30.09.2011
(51) Int. Cl.: A01D 34/18

(54) **Mähfingeranordnung**
Mowing finger assembly
Agencement de doigts de coupe

(43) Veröffentlichungstag der Anmeldung: 03.04.2013
(73) Patentinhaber: Erfindergemeinschaft Gustav und Fred Schumacher GbR, 57612 Eichelhardt (DE)
(72) Erfinder: Schumacher, Friedrich-Wilhelm, 57612 Birnbach (DE); Schumacher, Gustav, 57612 Eichelhardt (DE)
(74) Vertreter: Müller, Thomas Michael

(56) Entgegenhaltungen:
- WO-A1-2010/015083
- US-A1- 2002 005 035

## Beschreibung

Die Erfindung betrifft eine Mähfingeranordnung, mit einem Unterteil und einem Oberteil, die miteinander verbunden sind und zwei Mähfinger bilden, mit einen Raum, der zur Aufnahme einer Schneidvorrichtung zwischen dem Unterteil und dem Oberteil gebildet ist, wobei die beiden Mähfinger über jeweils einen Verbindungssteg am Oberteil und am Unterteil an einem in einer Arbeitsrichtung hinteren Ende der Mähfinger miteinander verbunden sind,

Mähfingeranordnungen für Fingerbalkenmähwerke von Erntemaschinen dienen zum Führen eines Mähmessers und bilden Gegenschneiden für die an dem Mähmesser angeordneten Messerklingen. Die EP 2 238 822 A1 zeigt einen Doppelmähfinger, der an einem Fingerbalken befestigt werden kann. Der Doppelfinger umfasst ein Oberteil und ein Unterteil, zwischen denen ein Raum zur Aufnahme einer Schneidvorrichtung, bestehend aus einer Schraubverbindung zur Befestigung des Mähmessers an einer Mähmesserführungsplatte gebildet ist. Ein Klingenspalt ist zum Führen des Mähmessers ebenfalls zwischen dem Unterteil und dem Oberteil gebildet. Um eine Mähfingeranordnung bereitzustellen, die eine hohe Stabilität gegen auftretende Querkräfte aufweist, sind die beiden Mähfinger über einen in Arbeitsrichtung hinteren und einen vorderen Verbindungssteg am Oberteil und über einen hinteren und einen vorderen Verbindungssteg am Unterteil miteinander verbunden. Die hinteren Verbindungsstege dienen auch zur Befestigung des Doppelfingers an dem Fingerbalken. Ein Nachteil ergibt sich, wenn der Doppelfinger bei eingebautem Messer gewechselt werden muss, was im Einsatzbetrieb bei einem beschädigten Mähfinger geboten ist, um die Stillstandzeit der Erntemaschine zu minimieren. Die Schneidvorrichtung weist im Bereich der Schraubverbindung zwischen der Mähmesserführungsplatte und dem Mähmesser eine Höhe senkrecht zur Ebene des Mähmessers auf, welche den Abstand zwischen den hinteren Stegen erheblich überschreitet. Zur Montage bzw. Demontage eines Doppelfingers muss dieser daher an seinem hinteren Ende mit mehr oder weniger geeigneten Hilfswerkzeugen aufgebogen werden. Die Montage bzw. Demontage ist dadurch umständlich und birgt in unmittelbarer Nähe des Mähwerks ein erhebliches Verletzungsrisiko.

Eine Aufgabe der Erfindung besteht darin, eine Mähfingeranordnung zur Verfügung zu stellen, deren Montage und Demontage bei eingebautem Messer vereinfacht ist und die dennoch eine hohe Stabilität aufweist.

Die Aufgabe wird durch den Gegenstand von Patentanspruch 1 gelöst. Bevorzugte Ausführungsformen und vorteilhafte Weiterbildungen sind in den Unteransprüchen angegeben.

Die erfindungsgemäße Mähfingeranordnung umfasst ein Unterteil und ein Oberteil, die miteinander verbunden sind und zwei Mähfinger bilden. Ein Raum ist zur Aufnahme einer Schneidvorrichtung zwischen dem Unterteil und dem Oberteil gebildet, wobei die beiden Mähfinger über jeweils einen Verbindungssteg am Oberteil und am Unterteil an einem in einer Arbeitsrichtung hinteren Ende der Mähfinger miteinander verbunden sind. Unter der Arbeitsrichtung wird die Arbeits- und Fortbewegungsrichtung der Erntemaschine verstanden, also diejenige Richtung in der der Mähfinger durch das Erntegut bewegt wird.

Erfindungsgemäß weist zumindest einer der Verbindungsstege zumindest abschnittsweise eine Kröpfung auf, wobei ein Abstand zwischen den Verbindungsstegen durch die Kröpfung vergrößert ist. Ein Vorteil besteht darin, dass die Schraubverbindung zwischen der Mähmesserführungsplatte und dem Mähmesser bei einer Demontage durch den Bereich der Kröpfung geführt werden kann, was wegen des größeren Abstands der Verbindungsstege vereinfacht ist, da die Verbindungsstege nicht so weit aufgebogen werden müssen, um die Schraubverbindung hindurchzuführen. Vorzugsweise ist der Abstand so groß, dass die Verbindungsstege bei der Demontage gar nicht aufgebogen werden müssen. Da der vergrößerte Abstand durch eine Kröpfung eines oder beider Verbindungsstege erreicht wird, bleibt das Anbaumaß im Bereich der Schraubverbindung zwischen der Mähfingeranordnung und einem Fingerbalken gleich, so dass die Verbindung bei der erfindungsgemäßen Mähfingeranordnung vorteilhaft nicht weniger stabil ist, als bei einem Doppelfinger nach dem Stand der Technik.

Ein Unterteil und ein Oberteil sind bevorzugt derart miteinander verbunden, dass zwei Mähfinger gebildet sind, die weiterhin bevorzugt einen Klingenspalt aufweisen, der zum Führen eines Mähmessers zwischen dem Unterteil und dem Oberteil gebildet ist, wobei das Unterteil untere Gegenschneiden und das Oberteil obere Gegenschneiden für das Mähmesser bildet und wobei weiterhin bevorzugt die beiden Mähfinger über einen hinteren und einen vorderen Verbindungssteg am Oberteil und über einen hinteren und einen vorderen Verbindungssteg am Unterteil miteinander verbunden sind und wobei besonders bevorzugt die beiden vorderen Verbindungsstege des Unterteils und des Oberteils Teil des Klingenspalts sind.

Durch zwei Verbindungsstege am Oberteil ist eine große Stabilität des Oberteils und damit der gesamten Mähfingeranordnung gegeben. Zudem können selbst bei höherer Stabilität die Verbindungsstege dünner ausgestaltet werden, als dies bei nur einem Verbindungssteg möglich wäre. Hierdurch ist es möglich, dass zwischen den beiden Verbindungsstegen am Oberteil die Mähfinger eine Wölbung aufweisen, die einen höheren Umformgrad als im Stand der Technik aufweist, so dass die Wölbung höher ausgebildet werden kann, um ein Mähmesser auch mit Schraubenmuttern nach oben weisend montieren zu können.

Vorzugsweise ist der hintere Verbindungssteg des Oberteils an einem in Arbeitsrichtung betrachtet hinteren Ende der Mähfinger angeordnet. Hierbei kann der hintere Verbindungssteg des Oberteils zur Befestigung der Mähfingeranordnung an einem Fingerbalken dienen. Der hintere Verbindungssteg des Unterteils kann in Arbeitsrichtung betrachtet ebenfalls am hinteren Ende der Mähfinger angeordnet sein und vorzugsweise zur Befestigung der Mähfingeranordnung an den Fingerbalken dienen. Bei der Montage der Mähfingeranordnung ist der Fingerbalken somit zwischen dem hinteren Verbindungssteg des Oberteils und dem hinteren Verbindungssteg des Unterteils angeordnet.

Gemäß einer bevorzugten Ausführungsform ist vorgesehen, dass beide Verbindungsstege zumindest abschnittsweise eine Kröpfung aufweisen, wodurch vorteilhaft ein größerer Abstand zur Demontage erreicht wird. Dazu erstrecken sich die Kröpfungen der Verbindungsstege sinnvollerweise in jeweils entgegengesetzter Richtung. Die mindestens eine Kröpfung ist weiterhin vorzugsweise durch einen Prägevorgang hergestellt.

Gemäß einer weiteren bevorzugten Ausführungsform ist vorgesehen, dass die Verbindungsstege jeweils beidseitig einen Befestigungsbereich zur Befestigung der Mähfingeranordnung an einem Fingerbalken aufweisen. Die Kröpfung ist insbesondere nur außerhalb der Befestigungsbereiche vorgesehen. Besonders bevorzugt ist die Kröpfung zwischen den jeweiligen Befestigungsbereichen angeordnet.

Zwischen jeweils gegenüberliegend an verschiedenen Verbindungsstegen angeordneten Befestigungsbereichen ist insbesondere ein Abstand gebildet, wobei der Abstand einem Anbaumaß der Schneidvorrichtung entspricht. Als das Anbaumaß wird das Maß bezeichnet, welches sich aus einer Stärke eines Messerbalkens und einer Stärke einer Mähmesserführungsplatte ergibt. Bevorzugt übersteigt der Abstand zwischen den Verbindungsstegen im Bereich der mindestens einen Kröpfung das Anbaumaß. Weiterhin bevorzugt entspricht der Abstand zwischen den Verbindungsstegen im Bereich der mindestens einen Kröpfung mindestens einer Bolzenlänge der Schraube einer Schraubverbindung, mittels welcher das Schneidmesser befestigt ist. Das Anbaumaß beträgt bevorzugt zwischen 10 Millimeter und 20 Millimeter, insbesondere 12 Millimeter, 14 Millimeter oder 17 Millimeter. Der Abstand der Verbindungsstege im Bereich der mindestens einen Kröpfung übersteigt das Anbaumaß vorzugsweise um 20% bis 100%, besonders bevorzugt um 30% bis 70%.

Die Erfindung wird nachfolgend anhand eines Ausführungsbeispiels in Zeichnungen näher erläutert. Die Ausführungen sind beispielhaft und schränken den allgemeinen Erfindungsgedanken nicht ein.

Es zeigen
Figuren 1A, 1B, 1C einen Doppelmähfinger nach dem Stand der Technik in verschiedenen Ansichten;
Figuren 2A, 2B, 2C ein Ausführungsbeispiel einer erfindungsgemäßen Mähfingeranordnung in verschiedenen Ansichten;
Figur 3 die Mähfingeranordnung gemäß Figuren 2A, 2B, 2C in montiertem Zustand mit einem Schneidmesser und
Figur 4 eine Schnittdarstellung der Mähfingeranordnung gemäß Figur 3.

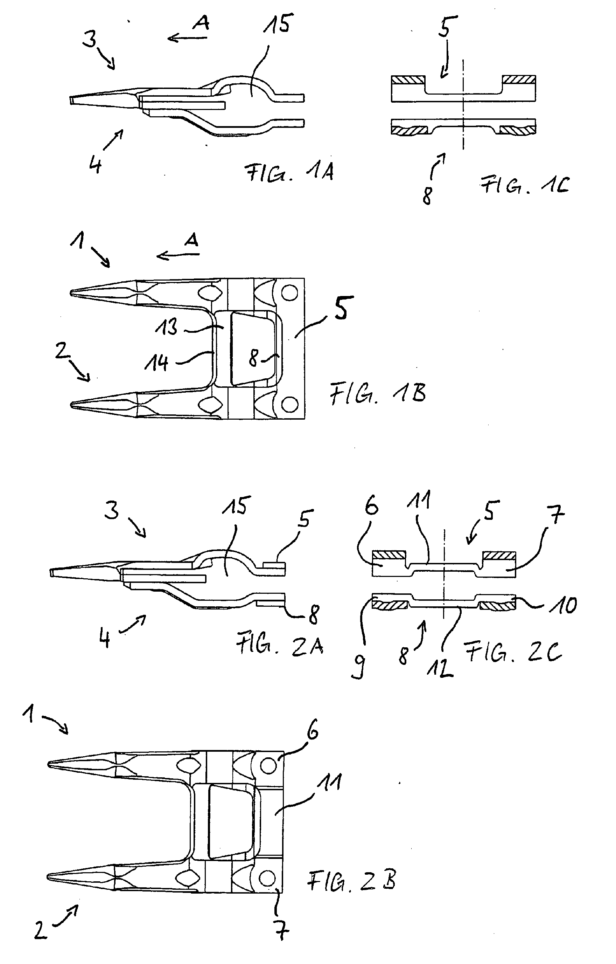

Ein Doppelmähfinger gemäß dem Stand der Technik ist in den Figuren 1A, 1B, 1C in verschiedenen Ansichten dargestellt, die gemeinsam beschrieben werden. Die Mähfingeranordnung weist einen ersten Mähfinger 1 und einen zweiten Mähfinger 2 auf, die in einer Arbeitsrichtung A nach vorne ausgerichtet sind. Mit Arbeitsrichtung A ist die Bewegungsrichtung des gesamten Mähwerks beim Mähvorgang gemeint. Die Mähfingeranordnung umfasst ein Oberteil 3 und ein Unterteil 4, die in bekannter Weise verbunden sind. In einer Seitenansicht quer zur Arbeitsrichtung A betrachtet ist zwischen dem Oberteil 3 und dem Unterteil 4 ein Raum 15 gebildet, in der eine Schraubverbindung der Schneidvorrichtung (nicht dargestellt) quer zur Arbeitsrichtung A oszillierend bewegbar ist, wie dies aus dem Stand der Technik allgemein bekannt ist.

Das Oberteil 3 weist an dem entgegen der Arbeitsrichtung A ausgerichteten Ende einen hinterer Verbindungssteg 5 des Oberteils 3 auf, der den ersten Mähfinger 1 mit dem zweiten Mähfinger 2 verbindet. In dem hinteren Verbindungssteg 5 des Oberteils 3 sind Befestigungsbohrungen vorgesehen, mittels derer die Mähfingeranordnung an einem Fingerbalken eines Mähwerks (nicht dargestellt) befestigt werden kann.

Zwischen den beiden Mähfingern 1, 2 ist darüber hinaus ein vorderer oberer Verbindungssteg 13 des Oberteils 3 vorgesehen. Der vordere Verbindungssteg 13 des Oberteils 3 weist eine hintere Kante auf, die dem hinteren Verbindungssteg 5 des Oberteils 3 zugewandt ist. Zwischen den Verbindungsstegen 5, 13 des Oberteils 3 ist eine Öffnung gebildet, die sich bis in den hinteren Verbindungssteg 5 des Oberteils 3 erstreckt.

Der vordere Verbindungssteg 13 des Oberteils 3 ist annähernd parallel zu einem vorderen Verbindungssteg 14 des Unterteils 4 angeordnet. Die Mähfinger 1, 2 weisen an dem in Arbeitsrichtung A hinteren Ende einen hinteren Verbindungssteg 8 des Unterteils 4 auf, in dem Befestigungsbohrungen vorgesehen sind, die mit den Befestigungsbohrungen des Oberteils 3 fluchten, so dass mittels sämtlicher Befestigungsbohrungen die Mähfingeranordnung an einem Fingerbalken mittels Befestigungsschrauben montiert werden kann (nicht dargestellt).

Wenn der Doppelfinger gemäß Figuren 1A, 1B,1C bei eingebautem Messer (nicht dargestellt) gewechselt werden soll, was im Einsatzbetrieb bei einem beschädigten Mähfinger sinnvoll ist, um die Stillstandzeit der Erntemaschine zu minimieren, stellt sich das Problem, dass die Schneidvorrichtung im Bereich der Schraubverbindung zwischen der Mähmesserführungsplatte und dem Mähmesser eine Höhe senkrecht zur Ebene des Mähmessers aufweist, welche den Abstand zwischen den hinteren Stegen 5, 8 erheblich überschreitet. Zur Montage bzw. Demontage eines Doppelfingers muss dieser daher an seinem hinteren Ende aufgebogen werden, wodurch die Montage bzw. Demontage umständlich ist und ein erhebliches Verletzungsrisiko birgt.

Eine erfindungsgemäße Mähfingeranordnung in Form eines Doppelmähfingers ist in den Figuren 2A, 2B, 2C in verschiedenen Ansichten dargestellt, die wiederum gemeinsam beschrieben werden. Im Wesentlichen gleiche Teile sind ebenso bezeichnet, wie in Figuren 1A, 1B, 1C und werden nicht noch einmal beschrieben. Der Verbindungssteg 5 des Oberteils 3 und/oder der Verbindungssteg 8 des Unterteils 4 weisen erfindungsgemäß eine Kröpfung 11, 12 auf, wobei die Kröpfungen 11, 12 lokal begrenzte Verformungen der Verbindungsstege sind, wodurch der Abstand zwischen den Verbindungsstegen 5, 8 vergrößert ist. Der obere Verbindungssteg 5 weist Befestigungsbereiche 6, 7 auf, welche außerhalb der Kröpfung 11 angeordnet sind und der Verbindungssteg 8 des Unterteils weist Befestigungsbereiche 9, 10 auf, welche ebenfalls außerhalb der Kröpfung 11 angeordnet sind. Durch die Befestigungsbereiche 6, 7, 9, 10 lässt sich die erfindungsgemäße Mähfingeranordnung sicher und stabil an einem Fingerbalken (nicht dargestellt) befestigen, während die Kröpfungen 11, 12 vorteilhaft einen größeren Abstand zur Durchführung der Schneidvorrichtung (nicht dargestellt) bieten ohne die Stabilität einzuschränken.

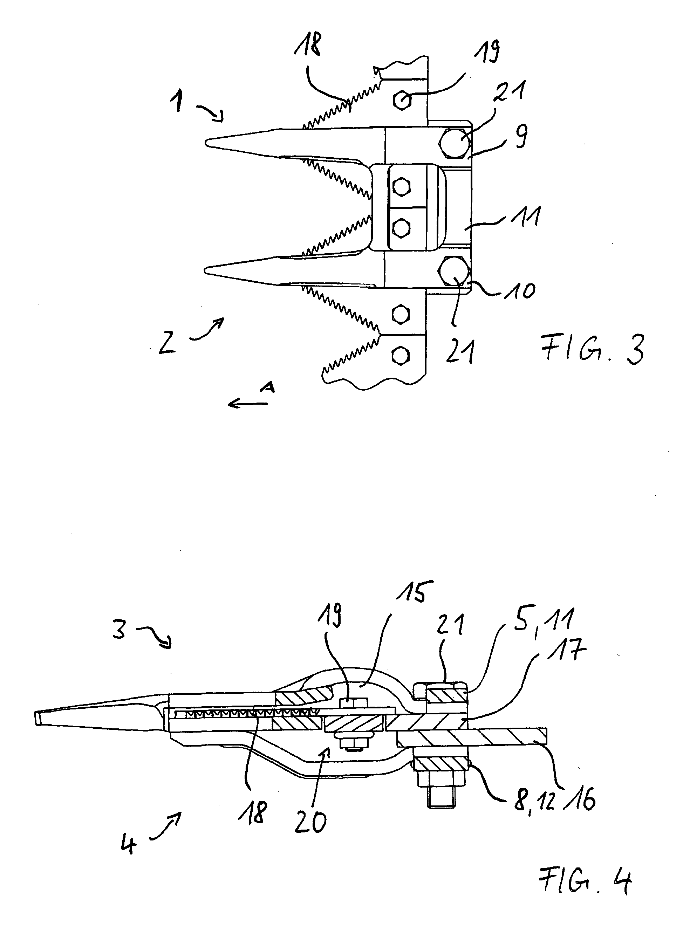

In der Figur 3 ist die erfindungsgemäße Mähfingeranordnung gemäß Figuren 2A, 2B, 2C in montiertem Zustand mit einem Mähmesser 18, wobei die Messerklingen in Draufsicht dreieckförmig gestaltet sind und eine Spitze des Dreiecks nach vorne in Arbeitsrichtung A weist, wie dies aus dem Stand der Technik allgemein bekannt ist. Die Schraubverbindungen 19 dienen zur Befestigung des Mähmessers 18, während die Schraubverbindungen 21 zur Befestigung der Mähfingeranordnung selbst vorgesehen sind.

Die Höhe der Schraubverbindung 19 ist am besten in der Figur 4 erkennbar. Diese entspricht einer Bolzenlänge der zur Verbindung der Schneidvorrichtung 20 verwendeten Schraube. Durch die Kröpfungen 11, 12 der Verbindungsstege 5, 8 ist der Abstand der Verbindungsstege 5, 8 gegenüber dem sogenannten Anbaumaß deutlich vergrößert. Das Anbaumaß ergibt sich aus der Stärke des Messerbalkens 16 und der Mähmesserführungsplatte 17, und es ist in den Befestigungsbereichen 9, 10 als Abstand zwischen dem Oberteil 3 und dem Unterteil 4 erhalten, wodurch eine stabile Befestigung der erfindungsgemäßen Mähfingeranordnung erreicht wird.

### Bezugszeichenliste

- 1: Erster Mähfinger
- 2: Zweiter Mähfinger
- 3: Oberteil
- 4: Unterteil
- 5: Verbindungssteg des Oberteils
- 6: Befestigungsbereich
- 7: Befestigungsbereich
- 8: Verbindungssteg des Unterteils
- 9: Befestigungsbereich
- 10: Befestigungsbereich
- 11: Kröpfung
- 12: Kröpfung
- 13: Vordersteg des Oberteils
- 14: Vordersteg des Unterteils
- 15: Raum
- 16: Messerbalken
- 17: Mähmesserführungsplatte
- 18: Mähmesser
- 19: Schraubverbindung
- 20: Schneidvorrichtung
- 21: Schraubverbindung
- A: Arbeitsrichtung

## Patentansprüche

1. Mähfingeranordnung umfassend
ein Unterteil (4) und ein Oberteil (3), die miteinander verbunden sind und zwei Mähfinger (1, 2) bilden,
einen Raum (15), der zur Aufnahme einer Schneidvorrichtung (20) zwischen dem Unterteil (4) und dem Oberteil (3) gebildet ist,
wobei die beiden Mähfinger (1, 2) über jeweils einen Verbindungssteg (5, 8) am Oberteil (3) und am Unterteil (4) an einem in Arbeitsrichtung (A) hinteren Ende der Mähfinger (1, 2) miteinander verbunden sind,
**dadurch gekennzeichnet,**
**dass** zumindest einer der Verbindungsstege (5, 8) zumindest abschnittsweise eine Kröpfung (11, 12) aufweist, wobei ein Abstand zwischen den Verbindungsstegen durch die Kröpfung vergrößert ist.

2. Mähfingeranordnung nach Anspruch 1,
**dadurch gekennzeichnet,**
**dass** beide Verbindungsstege (5, 8) zumindest abschnittsweise eine Kröpfung (11, 12) aufweisen.

3. Mähfingeranordnung nach Anspruch 2,
**dadurch gekennzeichnet,**
**dass** die Kröpfungen (11, 12) der Verbindungsstege (5, 8) sich in jeweils entgegengesetzter Richtung erstrecken.

4. Mähfingeranordnung nach einem der vorangehenden Ansprüche,
**dadurch gekennzeichnet,**
**dass** die mindestens eine Kröpfung (11, 12) durch einen Prägevorgang hergestellt ist.

5. Mähfingeranordnung nach einem der vorangehenden Ansprüche,
**dadurch gekennzeichnet,**
**dass** die Verbindungsstege (5, 8) jeweils beidseitig einen Befestigungsbereich (6, 7, 9, 10) zur Befestigung der Mähfingeranordnung an einem Fingerbalken aufweisen.

6. Mähfingeranordnung nach Anspruchs,
**dadurch gekennzeichnet,**
**dass** die Kröpfung (11, 12) zwischen den jeweiligen Befestigungsbereichen (6, 7, 9, 10) angeordnet ist.

7. Mähfingeranordnung nach einem der vorangehenden Ansprüche 5-6,
**dadurch gekennzeichnet,**
**dass** zwischen jeweils gegenüberliegend an verschiedenen Verbindungsstegen (5, 8) angeordneten Befestigungsbereichen (6, 7, 9, 10) ein Abstand gebildet ist, wobei der Abstand einem Anbaumaß der Schneidvorrichtung entspricht, wobei das Anbaumaß sich aus einer Stärke eines Messerbalkens (16) und einer Stärke einer Mähmesserführungsplatte (17) ergibt.

8. Mähfingeranordnung nach Anspruch 7,
**dadurch gekennzeichnet,**
**dass** ein Abstand zwischen den Verbindungsstegen (5, 8) im Bereich der mindestens einen Kröpfung (11, 12) das Anbaumaß übersteigt.

9. Mähfingeranordnung nach einem der vorangehenden Ansprüche,
**dadurch gekennzeichnet,**
**dass** ein Abstand zwischen den Verbindungsstegen (5, 8) im Bereich der mindestens einen Kröpfung (11, 12) mindestens einer Bolzenlänge einer Schraubverbindung (19) entspricht.

10. Mähfingeranordnung nach einem der vorangehenden Ansprüche 7-9,
**dadurch gekennzeichnet,**
**dass** das Anbaumaß zwischen 10 Millimeter und 20 Millimeter beträgt, insbesondere 12 Millimeter, 14 Millimeter oder 17 Millimeter.

11. Mähfingeranordnung nach einem der vorangehenden Ansprüche 7-10,
**dadurch gekennzeichnet,**
**dass** der Abstand der Verbindungsstege (5, 8) im Bereich der mindestens einen Kröpfung (11, 12) das Anbaumaß um 20% bis 100%, bevorzugt um 30% bis 70% übersteigt.

## Claims

1. Mowing finger arrangement comprising
a lower element (4) and an upper element (3), which are connected to each other and form two mowing fingers (1, 2),
a space (15) between the lower element (4) and the upper element (3) for accommodating a cutting device (20),
wherein the two mowing fingers (1, 2) are connected to each other by one connection web (5) on the upper element (3) and by one connection web (8) on the lower element (4) at a rear end of the mowing fingers (1, 2), when seen in working direction (A),
**characterised in**
**that** at least one of the connection webs (5, 8) has at least portion-wise an off-set (11, 12), wherein a distance between the connection webs is enlarged by the off-set.

2. Mowing finger arrangement according to claim 1,
**characterised in**
**that** both connection webs (5, 8) have at least portion-wise an off-set (11, 12).

3. Mowing finger arrangement according to claim 2,
**characterised in**
**that** the off-sets (11, 12) of the connection webs (5, 8) deviate, respectively, in opposite directions.

4. Mowing finger arrangement according to one of the preceding claims,
**characterised in**
**that** the at least one off-set (11, 12) is produced by means of a stamping procedure.

5. Mowing finger arrangement according to one of the preceding claims,
**characterised in**
**that** the connection webs (5, 8) have, respectively, at both sides an attachment portion (6, 7, 9, 10) for attaching the mowing finger arrangement on a finger bar.

6. Mowing finger arrangement according to claim 5,
**characterised in**
**that** the off-set (11, 12) is arranged between the respective attachment portions (6, 7, 9, 10).

7. Mowing finger arrangement according to one of the preceding claims 5 - 6,
**characterised in**
**that** a distance formed between the respective opposite attachment portions arranged on different connection webs (5, 8) corresponds to a mounting dimension of the cutting device, wherein the mounting dimension results from a thickness of the sickle bar (16) and a thickness of a sickle guide plate (17).

8. Mowing finger arrangement according to claim 7,
**characterised in**
**that** a distance between the connection webs (5, 8) in the area of the at least one off-set (11, 12) exceeds the mounting dimension.

9. Mowing finger arrangement according to one of the preceding claims,
**characterised in**
**that** a distance between the connection webs (5, 8) corresponds in the area of the at least one off-set (11, 12) to at least one bolt length of a screw connection (19).

10. Mowing finger arrangement according to one of the preceding claims 7 - 9,
**characterised in**
**that** the mounting dimension is between 10 mm and 20 mm, or, especially, 12 mm, 14 mm or 17 mm.

11. Mowing finger arrangement according to one of the preceding claims 7 - 10,
**characterised in**
**that** the distance of the connection webs (5, 8) exceeds in the area of the at least one off-set (11, 12) the mounting dimension by 20% up to 100%, preferably around 30% to 70%.

## Revendications

1. Agencement de doigts de coupe comprenant
une partie inférieure (4) et une partie supérieure (3) qui sont raccordées entre elles et forment deux doigts de coupe (1, 2),
un compartiment (15) qui est formé entre la partie inférieure (4) et la partie supérieure (3) pour recevoir un système de coupe (20),
pour lequel les deux doigts de coupe (1, 2) sont raccordés entre eux à une extrémité arrière des doigts de coupe (1, 2) dans le sens du travail (A) respectivement par une moulure de raccordement (5, 8) sur la partie supérieure (3) et la partie inférieure (4),
**caractérisé en ce**
**qu'**au moins une des moulures de raccordement (5, 8) comporte au moins par section un coude (11, 12) pour lequel un espace est agrandi par le coude entre les deux moulures de raccordement.

2. Agencement de doigts de coupe selon la revendication 1,
**caractérisé en ce que**
les deux moulures de raccordement (5, 8) comportent un coude (11, 12) au moins par section.

3. Agencement de doigts de coupe selon la revendication 2,
**caractérisé en ce que**
les coudes (11, 12) des moulures de raccordement (5, 8) s'étendent respectivement dans des directions opposées.

4. Agencement de doigts de coupe selon une quelconque des revendications précédentes,
**caractérisé en ce que**
les au moins un coude (11, 12) sont fabriqués par un procédé d'estampage.

5. Agencement de doigts de coupe selon une quelconque des revendications précédentes,
**caractérisé en ce que**
les moulures de raccordement (5, 8) comportent respectivement des deux côtés une zone de fixation (6, 7, 9, 10) pour fixer l'agencement de doigts de coupe à une barre de coupe.

6. Agencement de doigts de coupe selon la revendication 5,
**caractérisé en ce que**
le coude (11, 12) est disposé entre les zones de fixation (6, 7, 9, 10) respectives.

7. Agencement de doigts de coupe selon une quelconque des revendications 5-6,
**caractérisé en ce qu'**
un espace est formé entre les zones de fixation (6, 7, 9, 10) respectivement disposées opposées sur les différentes moulures de raccordement (5, 8) pour lequel l'espace correspond à une mesure de montage du dispositif de coupe, pour lequel la mesure de montage est obtenue à partir d'une épaisseur d'une barre porte-lame (16) et d'une épaisseur d'une plaque de guidage de lame (17).

8. Agencement de doigts de coupe selon la revendication 7,
**caractérisé en ce qu'**
un espace entre les moulures de raccordement (5, 8) dans la zone d'au moins un coude (11, 12) dépasse la mesure de montage.

9. Agencement de doigts de coupe selon une quelconque des revendications précédentes,
**caractérisé en ce qu'**
un espace entre les moulures de raccordement (5, 8) dans la zone d'au moins un coude (11, 12) correspond au moins à une longueur de boulon d'un raccord à vis (19).

10. Agencement de doigts de coupe selon une quelconque des revendications précédentes 7-9,
**caractérisé en ce que**
la mesure de montage se situe entre 10 millimètres et 20 millimètres, en particulier 12 millimètres, 14 millimètres ou 17 millimètres.

11. Agencement de doigts de coupe selon une quelconque des revendications précédentes 7-10,
**caractérisé en ce que**
l'espace des moulures de raccordement (5, 8) dans la zone d'au moins un coude (11, 12) dépasse la mesure de montage de 20% à 100%, de préférence de 30% à 70%.
